(19) Europäisches Patentamt

European Patent Office

Office européen des brevets

(11) **EP 1 006 699 B1**

(12) **EUROPEAN PATENT SPECIFICATION**

(45) Date of publication and mention
of the grant of the patent:
**25.08.2004 Bulletin 2004/35**

(51) Int Cl.⁷: **H04L 27/26**

(21) Application number: **99117653.8**

(22) Date of filing: **07.09.1999**

(54) **Symbol synchronisation for multicarrier transmission**

Synchronisierung von Symbolen bei Mehrträgerübertragung

Synchronisation de symboles pour transmission multiporteuse

(84) Designated Contracting States:
**DE FR GB**

(30) Priority: **30.11.1998 JP 34001798**

(43) Date of publication of application:
**07.06.2000 Bulletin 2000/23**

(73) Proprietor: **KABUSHIKI KAISHA TOSHIBA**
**Kawasaki-shi, Kanagawa 212-8572 (JP)**

(72) Inventors:
• **Seki, Takashi, c/o K. K. Toshiba**
**Minato-ku, Tokyo 105-8001 (JP)**

• **Taga, Noboru, c/o K. K. Toshiba**
**Minato-ku, Tokyo 105-8001 (JP)**

(74) Representative: **Henkel, Feiler & Hänzel**
**Möhlstrasse 37**
**81675 München (DE)**

(56) References cited:
**EP-A- 0 734 132          WO-A-96/19056**
**WO-A-97/26742**

## Description

This invention relates to an OFDM (Orthogonal Frequency Division Multiplex) demodulation apparatus used for, for example, a terrestrial digital broadcast, and more particularly to a control system for controlling the demodulation timing of OFDM symbols.

In the field of voice/image signal transmission systems, a large number of digital demodulation systems have recently been developed. In particular, in the terrestrial digital broadcast, attention is paid to an OFDM (Orthogonal Frequency Division Multiplex) demodulation system that shows a high resistance against multipass jamming. Prior art relating to the present invention will be described.

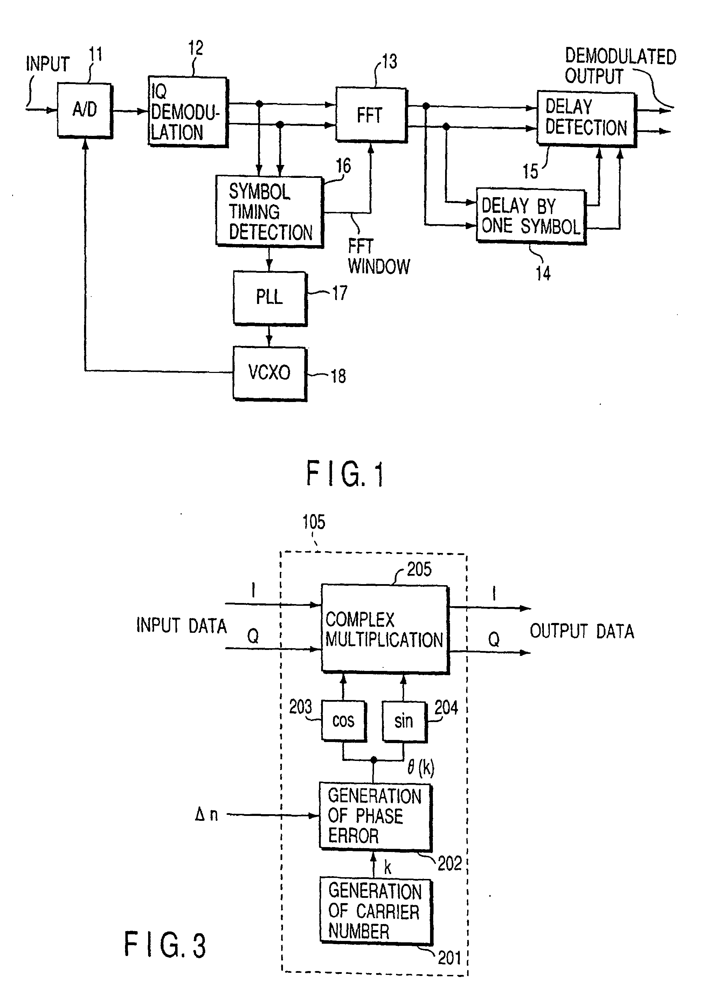

An OFDM signal is obtained by assigning data to a plurality of orthogonal carriers to thereby convert a frequency-domain signal to a time-domain signal. One symbol period of the OFDM signal consists of a guard period and an effective symbol period. The guard period is provided for removing the influence of a delay wave due to multipass, and part of a signal in the effective symbol period is copied in the guard period. Accordingly, in a reception apparatus, it is necessary to detect the timing of symbols from a received OFDM signal and to perform demodulation for all effective symbol periods. FIG. 1 shows a conventional OFDM demodulation apparatus for demodulating an OFDM signal in which each carrier is DQPSK-modulated.

As shown in FIG. 1, the input OFDM signal is converted into a digital signal by an A/D converter 11, and further into a complex base band signal by an IQ demodulation circuit 12. The output of the demodulation circuit 12 is supplied to a fast Fourier transform (FFT) circuit 13 and also to a symbol timing detection circuit 16. The symbol timing detection circuit 16 detects the timing of the generation of symbols, using the guard periods contained in the OFDM signal, and generates an FFT window signal used for determining the point in time at which the FFT demodulation is started. The FFT window signal is supplied to the FFT circuit 13.

The FFT circuit 13 extracts each effective symbol period of the OFDM signal on the basis of the FFT window signal supplied from the symbol timing detection circuit 16, thereby performing FFT processing to convert the time-domain signal into a frequency-domain signal and obtain data carried by each carrier. The output of the FFT circuit 13 is supplied to a one-symbol storage circuit 14 and also to a delay wave detection circuit 15. The delay wave detection circuit 15 detects the delay wave of each carrier, using the outputs of the FFT circuit 13 and the one-symbol storage circuit 14, thereby obtaining demodulated data.

As described above, the initial determination of the position of the FFT window is executed by the symbol timing detection circuit 16. After that, to hold the FFT window, a clock phase error is detected using the symbol generation timing detected by the symbol timing detection circuit 16, and the clock phase is controlled by a PLL circuit 17 and a VCXO (voltage control type crystal Oscillation) circuit 18.

When the position of the FFT window shifts, the phase of the FFT-demodulated output varies. Accordingly, in, for example, the OFDM demodulation apparatus shown in FIG. 1, a phase difference occurs between the outputs of the FFT circuit 13 and the one-symbol storage circuit 14, and hence normal demodulation cannot be performed. In order to avoid an abrupt phase difference, in the FIG. 1 apparatus, the clock phase is controlled by the PLL to control the position of the FTT window.

When the state of reception has abruptly changed while, for example, the apparatus is moved, it is necessary to change the position of the FFT window at a high speed. However, during the control of the clock phase using the PLL, the FFT window position cannot be changed quickly.

As described above, in the OFDM demodulation apparatus, the clock phase is controlled by the PLL to suppress variations in FFT window position in order to prevent an abrupt phase change, and accordingly the FFT window position cannot be changed quickly when the state of reception has abruptly changed.

An OFDM demodulation apparatus according to the precharacterizing part of claim 1 is known from WO-A-96 19056.

The object of the invention is to provide an OFDM demodulation apparatus capable of performing normal demodulation even when the FFT window position has changed at a high speed.

To attain the object, there is provided an OFDM demodulation apparatus which receives an OFDM (Orthogonal Frequency Division Multiplex) signal, detects the timing of the demodulation of OFDM symbols, creates a demodulation timing signal, demodulates the OFDM symbols on the basis of the demodulation timing signal, stores the demodulated OFDM output in storage means for the period of a predetermined number of symbols, detects a change in the demodulation timing signal in the period of the predetermined number of symbols, and corrects the output phase of the storage means on the basis of the detection result, thereby demodulating data, as well as the demodulated OFDM signal, by performing, for example, delay detection.

Since in the above-described structure, the output phase of the storage means is corrected so as to be identical to that of the demodulated OFDM signal when the timing of the generation of the demodulation timing signal has changed, normal demodulation processing can be performed later.

This summary of the invention does not necessarily describe all necessary features so that the invention may also be a sub-combination of these described features.

The invention can be more fully under stood from the following detailed description when taken in conjunction with the accompanying drawings, in which:

FIG. 1 is a block diagram illustrating an example of a structure of a conventional OFDM demodulation apparatus;
FIG. 2 is a block diagram illustrating the structure of an OFDM demodulation apparatus according to a first embodiment of the invention;
FIG. 3 is a block diagram showing the specific structure of a phase correction circuit incorporated in the first embodiment;
FIG. 4 is a block diagram illustrating the structure of an OFDM demodulation apparatus according to a second embodiment of the invention;
FIG. 5 is a view useful in explaining an example of a format employed in an OFDM signal; and
FIG. 6 is a block diagram illustrating the structure of an OFDM demodulation apparatus according to a third embodiment of the invention.

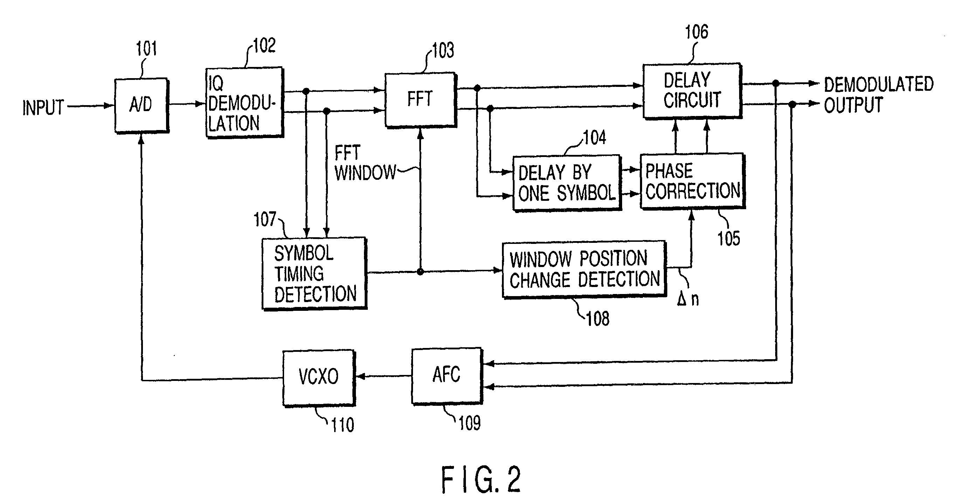

The embodiments of the invention will be described in detail with reference to FIGS. 2 to 6.

(First Embodiment)

FIG. 2 is a block diagram showing the structure of an OFDM demodulation apparatus, according to a first embodiment of the invention, for receiving an OFDM signal having each carrier DQPSK-modulated.

As shown, the input OFDM signal is converted into a digital signal by an A/D converter 101 and then into a complex base band signal by an IQ demodulation circuit 102. The output of the IQ demodulation circuit 102 is supplied to an FFT circuit 103 and also to a symbol timing detection circuit 107. The symbol timing detection circuit 107 detects the timing of the generation of symbols, using guard periods contained in the OFDM signal, and generates an FFT window signal. The FFT window signal is supplied to the FFT circuit 103 and also to a window position change detection circuit 108. The window position change detection circuit 108 detects a change $\Delta n$ in FFT window position between symbols.

The FFT circuit 103 extracts each effective symbol period of the OFDM signal on the basis of the FFT window signal supplied from the symbol timing detection circuit 107, thereby performing FFT processing to convert the time-domain signal into a frequency-domain signal and obtain data carried by each carrier. The output of the FFT circuit 103 is supplied to a one-symbol storage circuit 104 and also to a phase correction circuit 105. The phase correction circuit 105 calculates a phase change in each carrier based on the change $\Delta n$ in FFT window position, thereby correcting the output phase of the one-symbol storage circuit 104.

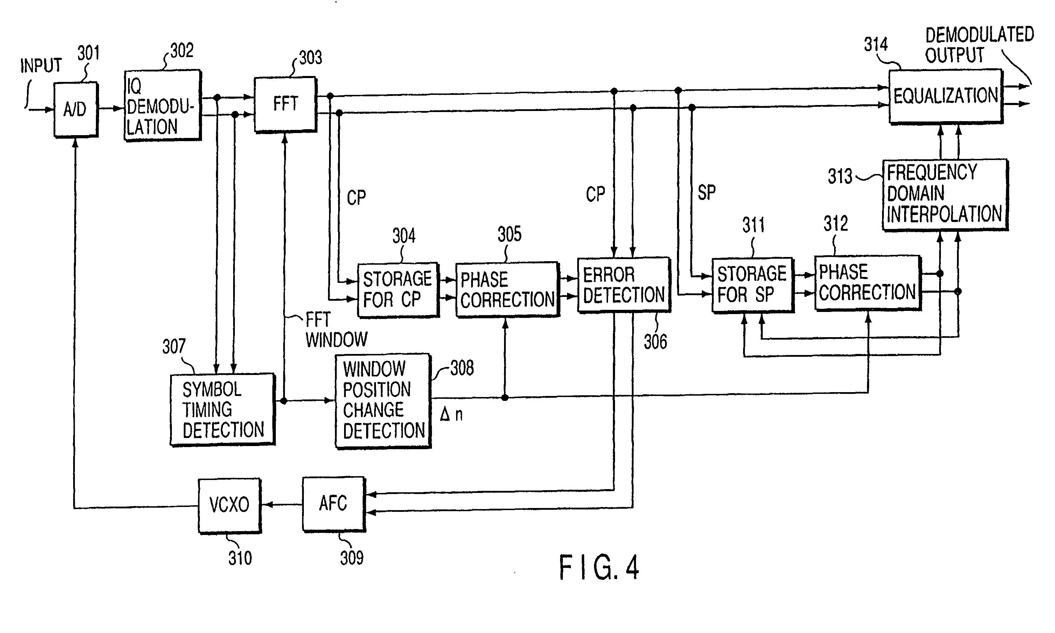

FIG. 3 is a block diagram showing the specific structure of the phase correction circuit 105. In FIG. 3, a carrier number generation circuit 201 generates a carrier number $\underline{k}$ in synchronism with the FFT window, and informs a phase error generation circuit 202 of the carrier number $\underline{k}$. The phase error generation circuit 202 calculates a phase error $\theta(k)$ in accordance with the following formula, using the carrier number $\underline{k}$ and the window position change $\Delta n$ supplied from the window position change detection circuit 108. $\Delta n < 0$ is satisfied when the FTT window position has shifted forward as compared with the previous detection.

$$\theta(k) = -2\pi \ \Delta n/N$$

N: Number of FFT points
k: Carrier number, $-N/2 \leqq k < N/2$

The phase error $\theta(k)$ of each carrier is supplied to a complex multiplier 205 via a cos circuit 203 and a sin circuit 204. The complex multiplier 205 corrects the phase of each carrier by complex multiplication of I and Q signals output from the one-symbol delay circuit 104 and the phase error in the complex form output from the cos circuit 203 and the sin circuit 204. The phase correction circuit used in each embodiment of the invention is realized by the structure shown in FIG. 3.

In FIG. 2, the outputs of the FFT circuit 103 and the phase correction circuit 105 are supplied to a delay detection circuit 106, where delay detection is performed and demodulated data is output. Further, the output of the delay detection circuit 106 is supplied to a clock AFC circuit 109, where clock frequency synchronization is performed by controlling the oscillation frequency of the delay detection circuit 106.

In other words, when in the OFDM demodulation apparatus constructed as above, the symbol timing detection circuit 107 has detected a change in the timing of the generation of symbols, it immediately outputs the FFT window signal to the FFT circuit 103, thereby displacing the FFT window. Although at this time, a phase change occurs in the output of the FFT circuit 103, a displacement of the window position is detected by the window position change detection circuit 108, and the output phase of the one-symbol delay circuit 104 is controlled in accordance with the detected displacement so as to be identical to the output phase of the FFT circuit 103 supplied to the delay detection circuit 106.

Since the window position change detection circuit 108 and the phase correction circuit 105 correct, when the FFT window position has shifted, the data phase corresponding to the last symbol in accordance with the phase of the present FFT output, correct demodulation can be executed using delay detection. Moreover, since a change in the FFT window position can be corrected, no PLL circuit but only the AFC circuit is needed for synchronization reproduction, unlike the conventional case.

(Second Embodiment)

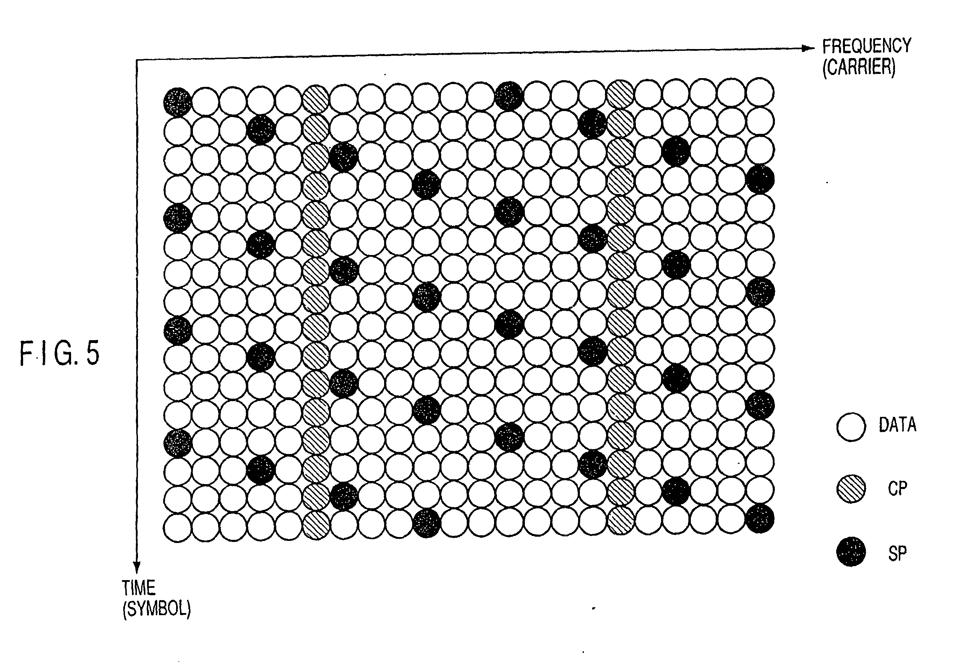

FIG. 4 is a block diagram illustrating an OFDM demodulation apparatus according to a second embodiment. This apparatus receives an OFDM signal in which continuous pilot signals (CP) and separate pilot signals (SP), as well as data signals, are assigned to predetermined portions of a symbol as shown in FIG. 5.

In FIG. 4, the input OFDM signal is converted into a digital signal by an A/D converter 301 and then into a complex base band signal by an IQ demodulation circuit 302. The output of the IQ demodulation circuit 302 is supplied to an FFT circuit 303 and also to a symbol timing detection circuit 307. The symbol timing detection circuit 307 detects the timing of the generation of symbols, using guard periods contained in the OFDM signal, thereby generating an FFT window signal. The FFT window signal is supplied to the FFT circuit 303 and also to a window position change detection circuit 308, where a change $\Delta n$ in FFT window position between symbols.

The FFT circuit 303 extracts each effective symbol period of the OFDM signal on the basis of the FFT window signal supplied from the symbol timing detection circuit 307, thereby performing FFT processing to convert the time-domain signal into a frequency-domain signal and obtain data carried by each carrier. The output of the FFT circuit 303 is supplied to a CP storage circuit 304, where it is temporarily stored and delayed by one symbol. The output of the CP storage circuit 304 is supplied to a phase correction circuit 305.

The phase correction circuit 305 calculates a phase change in each carrier based on the change $\Delta n$ in FFT window position which is supplied from the window position change detection circuit 308, thereby correcting the output phase of the CP storage circuit 304. The outputs of the FFT circuit 303 and the phase correction circuit 305 are supplied to an error detection circuit 306, where a phase difference between the symbols of the CP carrier is detected. The output of the error detection circuit 306 is supplied to a clock AFC circuit 309, where clock frequency synchronization is performed by controlling the oscillation frequency of a VCXO circuit 310.

As described above, even when the FFT window position has shifted, the phase of CP data corresponding to the last symbol is corrected by the window position change detection circuit 308 and the phase correction circuit 305 in accordance with the phase of the present FFT output, with the result that normal error detection is possible and hence the accuracy of the AFC processing can be maintained.

The output of the FFT circuit 303 is also supplied to an SP storage circuit 311. The SP storage circuit 311 holds an SP signal contained in the output of the FFT circuit 303 in synchronism with the generation of each SP signal as shown in FIG. 5. The output of the SP storage circuit 311 is supplied to a phase correction circuit 312.

The phase correction circuit 312 calculates a phase change in each carrier based on the change $\Delta n$ in FFT window position, thereby correcting the output phase of the SP storage circuit 311 except for presently received SP data. At this time, the corrected SP data is stored by the SP storage circuit 311 and used in the next SP data processing. The output of the phase correction circuit 312 is supplied to a frequency-domain interpolation circuit 313, where interpolation of the SP data is executed. The output of the frequency-domain interpolation circuit 313 is supplied to an equalization circuit 314, where the output of the FFT circuit 303 is equalized to obtain demodulated data.

As described above, even when the FFT window position has shifted, the previous SP data is corrected by the window position change detection circuit 398 and the phase correction circuit 312 in accordance with the phase of the present FFT output, whereby normal equalization error detection can be executed.

(Third Embodiment)

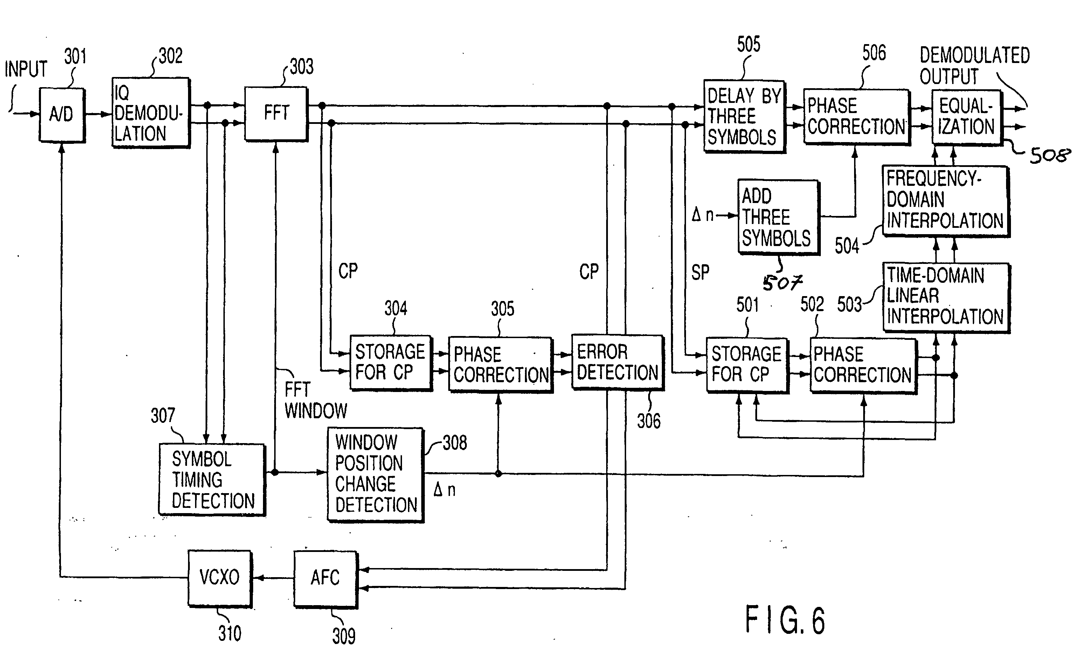

FIG. 6 is a block diagram illustrating an OFDM demodulation apparatus according to a third embodiment of the invention. This apparatus receives an OFDM signal which contains continuous pilot signals (CP) and separate pilot signals (SP) as shown in FIG. 5. In FIG. 6, similar structural elements to those in FIG. 4 are denoted by corresponding reference numerals, and are not described.

As shown in FIG. 6, the output of an FFT circuit 303 is supplied to an SP storage circuit 501, which stores two timed continuous SP signals in accordance with the timing of the generation of SP signals as shown in FIG. 5. The output of the SP storage circuit 501 is supplied to a phase correction circuit 502. The phase correction circuit 502 calculates a phase change in each carrier based on a change $\Delta n$ in FFT window position supplied from a window position change detection circuit 308, thereby correcting the phase of SP data output from the SP storage circuit 501 except for presently received SP data. At this time, the corrected SP data is stored by the SP storage circuit 501 and used in the next SP data processing.

The output of the phase correction circuit 502 is supplied to a time-domain interpolation circuit 503, where interpolation of the present SP data is executed using the two timed continuous SP data items. The output of the time-domain interpolation circuit 503 is supplied to a frequency-domain interpolation circuit 504, where frequency-domain interpolation of the SP data is performed. The output of the frequency-domain interpolation circuit 504 is supplied to an equalization circuit 508.

The output of the FFT circuit 303 is also supplied to a three-symbol delay circuit 505, where it is delayed by three symbols. The output of the three-symbol delay circuit 505 is supplied to a phase correction circuit 506. The phase correction circuit 506 corrects the output phase of the three-symbol delay circuit 505 on the basis of a window position change which occurs in the period of three symbols and is calculated by a three-symbol adder circuit 507, to which the output of the window position change detection circuit 308 is supplied. The output of the phase correction circuit 506 is supplied to the equalization circuit 508, where it is equalized using an error signal output from the frequency-domain interpolation circuit 504, thereby obtaining demodulated data.

Even when, in the above-described structure, the FFT window position has shifted, the previous SP data is corrected by the window position change detection circuit 308 and the phase correction circuit 502 in accordance with the phase of the present FFT output, while an OFDM symbol, which is obtained three symbols earlier, is corrected by the three-symbol adder circuit 507 and the phase correction circuit 506 in accordance with the phase of the present FFT output. As a result, normal equalization processing is possible.

As described above, the invention can provide an OFDM demodulation apparatus which can perform normal signal processing by correcting data stored in a storage, even when the FFT window has shifted, and can make the FFT window follow at a high speed in accordance with a reception state, thereby performing normal demodulation processing.

## Claims

1.  An OFDM demodulation apparatus for demodulating an OFDM, Orthogonal Frequency Division Multiplex, signal obtained by assigning data to a plurality of orthogonal carriers to thereby convert a frequency-domain signal into a time-domain signal, the OFDM signal having a one-symbol period consisting of an effective symbol period and a guard period obtained by copying part of a signal contained in the effective symbol period,
    said apparatus comprising:

    synchronization reproducing means (101, 102, 109, 110, 301, 302, 309, 310) for receiving the OFDM signal and executing synchronization reproduction of the OFDM signal;
    demodulation timing signal generation means (107, 307) for receiving the OFDM signal obtained after the synchronization reproduction by the synchronization reproducing means, detecting timing of switching of OFDM symbols from one to another, and generating a signal indicating the timing, as a demodulation timing signal;
    OFDM demodulation means (103, 303) for extracting an effective symbol on the basis of the demodulation timing signal output from the demodulation timing signal generating means (107, 307) to demodulate it;
storage means (104, 304, 311, 501, 505) for storing a demodulated output of the OFDM demodulation means (103, 303) for a predetermined symbol period;
demodulation timing change detecting means (108, 308, 507) for detecting a change in the predetermined symbol period for the output of the demodulation timing signal generating means (107, 307);
correction means (105, 305, 312, 502, 506) for correcting a phase of an output of the storage means (104, 304, 311, 501, 505) on the basis of an output of the demodulation timing change detecting means (108, 308, 507); and
signal processing means (106, 306, 313, 314, 503, 504, 508) for performing signal processing for data demodulation or synchronization reproduction, using the output of the OFDM demodulation means (103, 303) and an output of the correction means (105, 305, 312, 502, 506),

    **characterized in that**
    when timing of generation of demodulation timing signals by the demodulation timing signal generating means (107, 307) has changed, the phase of the output of the storage means (104, 304, 311, 501, 505) is corrected in accordance with a change in the timing of generation of demodulation timing signals.

2.  An OFDM demodulation apparatus according to claim 1, **characterized by**
    means for subjecting each carrier contained in the OFDM signal to differential modulation,
    and wherein the storage means (104) are adapted to store an OFDM symbol output from the OFDM demodulation means (103) for a one-symbol period;
    the demodulation timing change detecting means (108) are adapted to detect a change in the timing of generation of demodulation timing signals;
    the correction means (105) are adapted to correct a phase of a last OFDM symbol output from the storage means (104); and
    the signal processing means (106) are adapted to perform delay detection using the output of the OFDM demodulation means (103) and an output of the correction means (105).

3.  An OFDM demodulation apparatus according to claim 1, **characterized in that** the synchronization reproducing means (101, 109, 110) are adapted to perform synchronization reproduction of the OFDM signal on the basis of the output of the OFDM demodulation means (103).

4.  An OFDM demodulation apparatus according to claim 1, **characterized in that** the OFDM signal contains a pilot carrier that is not modulated or is subjected to phase modulation;

the storage means (304) are adapted to store pilot data contained in the output of the OFDM demodulation means (303) for a one-symbol period;

the demodulation timing change detecting means (308) are adapted to detect a change in the timing of generation of demodulation timing signals in the one-symbol period;

the correction means (305) are adapted to correct a phase of last pilot data output from the storage means (304);

the signal processing means (306) are adapted to detect a phase difference between symbols of the pilot carrier, using pilot data contained in the output of the OFDM demodulation means (103) and an output of the correction means (305); and

the synchronization reproducing means (301, 309, 310) are adapted to perform synchronization reproduction on the basis of the phase difference obtained by the signal processing means (306).

5. An OFDM demodulation apparatus according to claim 1, **characterized in that** the OFDM signal contains non-modulated symbols for data demodulation transmitted at symbol intervals of n;

the storage means (311) are adapted to store non-modulated symbols contained in the output of the OFDM demodulation means (303) for the one-symbol period;

the demodulation timing change detecting means (308) are adapted to detect a change in the timing of generation of demodulation timing signals in the one-symbol period;

the correction means (312) are adapted to correct a phase of a last non-modulated symbol output from the storage means (311), and to update a delay amount of the storage means (311) in accordance with the corrected phase; and

the signal processing means (313, 314) are adapted to equalizes the output of the OFDM demodulation means (303) using an output of the correction means (312).

6. An OFDM demodulation apparatus according to claim 1, **characterized in that** the OFDM signal contains non-modulated symbols for data demodulation transmitted at symbol intervals of n;

the storage means (501, 505) include first and second storage sections (501, 505);

the demodulation timing change detecting means (308, 507) include first and second demodulation timing change detecting sections (308, 507);

the correction means (502, 506) include first and second correcting sections (502, 506);

the first storage section (501) is adapted to store non-modulated symbols contained in an output of the OFDM demodulation means (303) in a two-symbol period;

the first demodulation timing change detecting section (308) is adapted to detect a demodulation timing change in the one-symbol period;

the first correcting section (502) is adapted to correct a phase of each non-modulated symbol contained in the two-symbol period and output from the first storage section (501), except for a presently received non-modulated symbol, thereby replacing contents of the first storage section (501) with the corrected data;

the second storage section (505) is adapted to store OFDM symbols contained in the output of the OFDM demodulation means (303) in an (n-1) symbol period;

the second demodulation timing change detecting section (507) is adapted to detect a demodulation timing change in the (n-1) symbol period;

the second correcting section (506) is adapted to correct a phase of an OFDM symbol that is obtained the (n-1) symbol period earlier and output from the second storage section (505); and

the signal processing means (503, 504, 508) are adapted to estimate an error signal for equalization, using the non-modulated symbols transmitted at the symbol intervals of n and supplied from the first correcting section (502), thereby equalizing an output of the second correction section (506).

**Patentansprüche**

1. OFDM-Demodulationsvorrichtung zum Demodulieren eines OFDM- bzw. Orthogonal-Frequency-Division-Multiplex-Signals, das durch Zuweisen von Daten zu einer Mehrzahl von orthogonalen Trägern erhalten wird, um dadurch ein Frequenzdomänensignal in ein Zeitdomänensignal umzuwandeln, wobei das OFDM-Signal eine Einsymbolperiode aufweist, die aus einer effektiven Symbolperiode und einer Schutzperiode, die durch Kopieren eines Teils eines in der effektiven Symbolperiode enthaltenen Signals erhalten wird, aufgebaut ist,

wobei die Vorrichtung umfasst:

Synchronisationswiedergabemittel (101, 102, 109, 110, 301, 302, 309, 310) zum Empfangen des OFDM-Signals und Ausführen der Synchronisationswiedergabe des OFDM-Signals; Demodulationszeitsteuersignalerzeugungsmittel (107, 307) zum Empfangen des OFDM-Signals, das nach der Synchronisationswiedergabe durch die Synchronisationswiedergabemittel erhalten wurde, zum Erfassen der Zeitsteuerung des Umschaltens von einem OFDM-Symbol zum andern und zum Erzeugen eines die Zeitsteuerung angebenden Signals als ein Demodulationszeitsteuersignal;

OFDM-Demodulationsmittel (103, 303) zum Extrahieren eines effektiven Symbols auf der Grundlage des von den Demodulationszeitsteuersignalerzeugungsmitteln (107, 307), ausgegebenen Demodulationszeitsteuersignals, für das Demodulieren;

Speichermittel (104, 304, 311, 501, 505) zum Speichern einer demodulierten Ausgabe der OFDM-Demodulationsmittel (103, 303) für eine vorbestimmte Symbolperiode;

Demodulationszeitsteueränderungserfassungsmittel (108, 308, 507) zum Erfassen einer Änderung in der vorbestimmten Symbolperiode für die Ausgabe der Demodulationszeitsteuersignalerzeugungsmittel (107, 307);

Korrekturmittel (105, 305, 312, 502, 506) zum Korrigieren einer Phase einer Ausgabe der Speichermittel (104, 304, 311, 501, 505) auf der Grundlage einer Ausgabe der Demodulationszeitsteueränderungserfassungsmittel (108, 308, 507); und

Signalverarbeitungsmittel (106, 306, 313, 314, 503, 504, 508) zum Durchführen einer Signalverarbeitung zur Datendemodulation oder Synchronisationswiedergabe mittels der Ausgabe der OFDM-Demodulationsmittel (103, 303) und einer Ausgabe der Korrekturmittel (105, 305, 312, 502, 506),

**dadurch gekennzeichnet, dass**

wenn sich die Zeitsteuerung der Erzeugung des Demodulationszeitsteuersignals durch die Demodulationszeitsteuersignalerzeugungsmittel (107, 307) geändert hat, die Phase der Ausgabe der Speichermittel (104, 304, 311, 501, 505) in Übereinstimmung mit einer Änderung in der Zeitsteuerung der Erzeugung des Modulationszeitsteuersignale korrigiert wird.

2.  OFDM-Demodulationsvorrichtung gemäß Anspruch 1, **gekennzeichnet**

**durch** Mittel zum Unterziehen jedes in dem OFDM-Signal enthaltenden Trägers einer Differenzialmodulation;

und wobei die Speichermittel (104) angepasst sind, um ein von den OFDM-Demodulationsmitteln (103) ausgegebenes OFDM-Symbol für eine Einsymbolperiode zu speichern;

die Demodulationszeitsteueränderungserfassungsmittel (108) angepasst sind, um eine Änderung in der Zeitsteuerung der Erzeugung von Demodulationszeitsteuersignalen zu erfassen;

die Korrekturmittel (105) angepasst sind, um eine Phase von einem letzten, von den Speichermitteln (104) ausgegebenen OFDM-Symbol zu korrigieren; und

die Signalverarbeitungsmittel (106) angepasst sind, um eine Verzögerungserfassung mit der Ausgabe der OFDM-Demodulationsmittel (103) und einer Ausgabe der Korrekturmittel (105) durchzuführen.

3.  OFDM-Demodulationsvorrichtung gemäß Anspruch 1, **dadurch gekennzeichnet, dass** die Synchronisationswiedergabemittel (101, 109, 110) angepasst sind, um eine Synchronisationswiedergabe des OFDM-Signals auf der Grundlage der Ausgabe der OFDM-Demodulationsmittel (103) durchzuführen.

4.  OFDM-Demodulationsvorrichtung gemäß Anspruch 1, **dadurch gekennzeichnet, dass** das OFDM-Signal einen Pilotträger enthält, der nicht moduliert oder einer Phasenmodulation unterzogen wird;

die Speichermittel (304) angepasst sind, um in der Ausgabe der OFDM-Demodulationsmittel (303) enthaltene Pilotdaten für eine Einsymbolperiode zu speichern;

die Demodulationszeitsteueränderungserfassungsmittel (308) angepasst sind, um eine Änderung in der Zeitsteuerung der Erzeugung der Demodulationszeitsteuersignale in der Einsymbolperiode zu erfassen;

die Korrekturmittel (305) angepasst sind, um eine Phase von von den Speichermitteln (304) ausgegebenen letzten Pilotdaten zu korrigieren;

die Signalverarbeitungsmittel (306) angepasst sind, um eine Phasendifferenz zwischen Symbolen des Pilotträgers mittels in der Ausgabe der OFDM-Demodulationsmittel (103) enthaltener Pilotdaten und einer Ausgabe der Korrekturmittel (305) zu erfassen; und

die Synchronisationswiedergabemittel (301, 309, 310) angepasst sind, um eine Synchronisationswiedergabe auf der Grundlage der durch die Signalverarbeitungsmittel (306) erhaltenen Phasendifferenz durchzuführen.

5.  OFDM-Demodulationsvorrichtung gemäß Anspruch 1, **dadurch gekennzeichnet, dass** das OFDM-Signal nicht modulierte Symbole zur Datendemodulation enthält, die bei Symbolintervallen von n übertragen werden;

die Speichermittel (311) angepasst sind, um in der Ausgabe der OFDM-Demodulationsmittel (303) für die Einsymbolperiode enthaltene nicht modulierte Symbole zu speichern;

die Demodulationszeitsteueränderungserfassungsmittel (308) angepasst sind, um eine Änderung in der Zeitsteuerung der Erzeugung der Demodulationszeitsteuersignale in der Einsymbolperiode zu erfassen;

die Korrekturmittel (312) angepasst sind, um eine Phase eines letzten nicht demodulierten Symbols zu korrigieren, das von dem Speichermittel (311) ausgegeben wird, und um eine Verzögerungsmenge der Speichermittel (311) in Übereinstimmung mit der korrigierten Phase zu aktualisieren; und

die Signalverarbeitungsmittel (313, 314) angepasst sind, um die Ausgabe der Demodulationsmittel (303) mittels einer Ausgabe der Korrekturmittel (312) auszugleichen.

6. OFDM-Demodulationsvorrichtung gemäß Anspruch 1, **dadurch gekennzeichnet, dass** das OFDM-Signal nicht modulierte Symbole zur Datendemodulation enthält, die mit Symbolintervallen von n übertragen werden;

die Speichermittel (501, 505) erste und zweite Speicherabschnitte (501, 505) umfassen;

die Demodulationszeitsteueränderungserfassungsmittel (308, 507) erste und zweite Demodulationszeitsteueränderungserfassungsabschnitte (308, 507) umfassen;

die Korrekturmittel (502, 506) erste und zweite Korrekturabschnitte (502, 506) umfassen;

der erste Speicherabschnitt (501) angepasst ist, um in einer Ausgabe der OFDM-Demodulationsmittel (303) enthaltenen nicht modulierten Symbole in einer Zweisymbolperiode zu speichern;

der erste Demodulationszeitsteueränderungserfassungsabschnitt (308) angepasst ist, um eine Demodulationszeitsteueränderung in der Einsymbolperiode zu erfassen;

der erste Korrekturabschnitt (502) angepasst ist, um eine Phase jedes nicht modulierten Symbols, das in der Zweisymbolperiode enthalten ist und von dem ersten Speicherabschnitt (501) ausgegeben wird, mit Ausnahme eines gegenwärtig empfangenen nicht modulierten Symbols zu korrigieren, wodurch der Inhalt des ersten Speicherabschnitts (501) durch die korrigierten Daten ersetzt wird;

der zweite Speicherabschnitt (505) angepasst ist, um in der Ausgabe der OFDM-Demodulationsmittel (303) enthaltene OFDM-Symbole in einer (n-1)-Symbolperiode zu speichern;

der zweite Demodulationszeitsteueränderungserfassungsabschnitt (507) angepasst ist, um eine Demodulationszeitsteueränderung in der (n-1)-Symbolperiode zu erfassen;

der zweite Korrekturabschnitt (506) angepasst ist, um eine Phase eines OFDM-Symbols zu korrigieren, das von der früheren (n-1)-Symbolperiode erhalten wurde und von dem zweiten Speicherabschnitt (505) ausgegeben wird; und

die Signalverarbeitungsmittel (503, 504, 508) angepasst sind, um ein Fehlersignal für den Ausgleich mittels der nicht modulierten Symbole zu schätzen, die an den Symbolintervallen von n übertragen und von dem ersten Korrekturmittel (502) geliefert wurden, wodurch eine Ausgabe des zweiten Korrekturabschnitts (506) ausgeglichen wird.

## Revendications

1. Appareil de démodulation OFDM pour démoduler un signal de multiplexage par division de fréquence orthogonal ou OFDM qui est obtenu en assignant des données à une pluralité de porteuses orthogonales afin d'ainsi convertir un signal du domaine des fréquences selon un signal du domaine temporel, le signal OFDM présentant une période d'un symbole qui est constituée par une période de symbole effective et une période de garde qui est obtenue en copiant une partie d'un signal qui est contenue dans la période de symbole effective,

ledit appareil comprenant :

un moyen de reproduction de synchronisation (101, 102, 109, 110, 301, 302, 309, 310) pour recevoir le signal OFDM et pour exécuter une reproduction de synchronisation du signal OFDM ;

un moyen de génération de signal de cadencement de démodulation (107, 307) pour recevoir le signal OFDM qui est obtenu après la reproduction de synchronisation au moyen du moyen de reproduction de synchronisation, pour détecter un cadencement de commutation de symboles OFDM les uns par rapport aux autres et pour générer un signal qui indique le cadencement, en tant que signal de cadencement de démodulation ;

un moyen de démodulation OFDM (103, 303) pour extraire un symbole effectif sur la base du signal de cadencement de démodulation qui est émis en sortie depuis le moyen de génération de signal de cadencement de démodulation (107, 307) afin de le démoduler ;

un moyen de stockage (104, 304, 311, 501, 505) pour stocker une sortie démodulée du moyen de démodulation OFDM (103, 303) pendant une période de symboles prédéterminée ;

un moyen de détection de modification de cadencement de démodulation (108, 308, 507) pour détecter une modification au niveau de la période de symboles prédéterminée pour la sortie du moyen de génération de signal de cadencement de démodulation (107, 307) ;

un moyen de correction (105, 305, 312, 502, 506) pour corriger une phase d'une sortie du moyen de stockage (104, 304, 311, 501, 505) sur la base d'une sortie du moyen de détection de modification de cadencement de démodulation (108, 308, 507) ; et

un moyen de traitement de signal (106, 306, 313, 314, 503, 504, 508) pour réaliser un traitement de signal pour une démodulation de données ou une reproduction de synchronisation en utilisant la sortie du moyen de démodulation OFDM (103, 303) et une sortie du moyen de correction (105, 305, 312, 502, 506),

**caractérisé en ce que** :

lorsque le cadencement de génération de signaux de cadencement de démodulation par le moyen de génération de signal de cadencement de démodulation (107, 307) est modifié, la phase de la sortie du moyen de stockage (104, 304, 311, 501, 505) est corrigée conformément à une modification du cadencement de génération de signaux de cadencement de démodulation.

2. Appareil de démodulation OFDM selon la revendication 1, **caractérisé par** :

un moyen pour soumettre chaque porteuse qui est contenue dans le signal OFDM à une modulation différentielle ; et

dans lequel le moyen de stockage (104) est adapté pour stocker un symbole OFDM qui est émis en sortie depuis le moyen de démodulation OFDM (103) pendant une période d'un symbole ;

le moyen de détection de modification de cadencement de démodulation (108) est adapté pour détecter une modification du cadencement de génération de signaux de cadencement de démodulation ;

le moyen de correction (105) est adapté pour corriger une phase d'un dernier symbole OFDM qui est émis en sortie depuis le moyen de stockage (104) ; et

le moyen de traitement de signal (106) est adapté pour réaliser une détection de retard en utilisant la sortie du moyen de démodulation OFDM (103) et une sortie du moyen de correction (105).

3. Appareil de démodulation OFDM selon la revendication 1, **caractérisé en ce que** le moyen de reproduction de synchronisation (101, 109, 110) est adapté pour réaliser une reproduction de synchronisation du signal OFDM sur la base de la sortie du moyen de démodulation OFDM (103).

4. Appareil de démodulation OFDM selon la revendication 1, **caractérisé en ce que** :

le signal OFDM contient une porteuse de pilote qui n'est pas modulée ou qui est soumise à une modulation de phase ;

le moyen de stockage (304) est adapté pour stocker des données de pilote qui sont contenues dans la sortie du moyen de démodulation OFDM (303) pendant une période d'un symbole ;

le moyen de détection de modification de cadencement de démodulation (308) est adapté pour détecter une modification du cadencement de génération de signaux de cadencement de démodulation dans la période d'un symbole ;

le moyen de correction (305) est adapté pour corriger une phase de dernières données de pilote qui sont émises en sortie depuis le moyen de stockage (304) ;

le moyen de traitement de signal (306) est adapté pour détecter une différence de phase entre des symboles de la porteuse de pilote en utilisant des données de pilote qui sont contenues dans la sortie du moyen de démodulation OFDM (103) et une sortie du moyen de correction (305) ; et

le moyen de reproduction de synchronisation (301, 309, 310) est adapté pour réaliser une reproduction de synchronisation sur la base de la différence de phase qui est obtenue par le moyen de traitement de signal (306).

5. Appareil de démodulation OFDM selon la revendication 1, **caractérisé en ce que** :

le signal OFDM contient des symboles non modulés pour une démodulation de données comme transmis selon des intervalles de n symboles ;

le moyen de stockage (311) est adapté pour stocker des symboles non modulés qui sont contenus dans la sortie du moyen de démodulation OFDM (303) pendant une période d'un symbole ;

le moyen de détection de modification de cadencement de démodulation (308) est adapté pour détecter une modification du cadencement de génération des signaux de cadencement de démodulation dans la période d'un symbole ;

le moyen de correction (312) est adapté pour corriger une phase d'un dernier symbole non modulé qui est émis en sortie depuis le moyen de stockage (311) et pour mettre à jour une valeur de retard du moyen de stockage (311) conformément à la phase corrigée ; et

le moyen de traitement de signal (313, 314) est adapté pour égaliser la sortie du moyen de démodulation OFDM (303) en utilisant une sortie du moyen de correction (312).

6. Appareil de démodulation OFDM selon la revendication 1, **caractérisé en ce que** :

le signal OFDM contient des symboles non modulés pour une démodulation de données comme transmis selon des intervalles de n symboles ;

le moyen de stockage (501, 505) inclut des première et seconde sections de stockage (501, 505) ;

le moyen de détection de modification de cadencement de démodulation (308, 507) inclut des première et seconde sections de détection de modification de cadencement de démodulation (308, 507) ;

le moyen de correction (502, 506) inclut des première et seconde sections de correction (502, 506) ;

la première section de stockage (501) est adaptée pour stocker des symboles non modulés qui sont contenus dans une sortie du moyen de démodulation OFDM (303) dans une période de deux symboles ;

la première section de détection de modification de cadencement de démodulation (308) est adaptée pour détecter une modification de cadencement de démodulation dans la période d'un symbole ;

la première section de correction (502) est adaptée pour corriger une phase de chaque symbole non modulé qui est contenu dans la période de deux symboles et pour l'émettre en sortie à partir de la première section de stockage (501) à l'exception d'un symbole non modulé reçu présentement, d'où ainsi le remplacement du contenu de la première section de stockage (501) à l'aide des données corrigées ;

la seconde section de stockage (505) est adaptée pour stocker des symboles OFDM qui sont contenus dans la sortie du moyen de démodulation OFDM (303) dans une période de (n-1) symboles ;

la seconde section de détection de modification de cadencement de démodulation (507) est adaptée pour détecter une modification de cadencement de démodulation dans la période de (n-1) symboles ;

la seconde section de correction (506) est adaptée pour corriger une phase d'un symbole OFDM qui est obtenu dans la période de (n-1) symboles plus tôt et pour l'émettre en sortie à partir de la seconde section de stockage (505) ; et

le moyen de traitement de signal (503, 504, 508) est adapté pour estimer un signal d'erreur pour une égalisation en utilisant les symboles non modulés qui sont transmis selon les intervalles de n symboles et qui sont appliqués depuis la première section de correction (502), d'où ainsi l'égalisation d'une sortie de la seconde section de correction (506).

INPUT 11

A/D

12

IQ DEMODU-LATION

13

FFT

DEMODULATED OUTPUT

DELAY DETECTION

SYMBOL TIMING DETECTION 16

FFT WINDOW

DELAY BY ONE SYMBOL

15

14

PLL 17

VCXO 18

# F I G. 1

105

205

INPUT DATA

I

Q

COMPLEX MULTIPLICATION

I

Q

OUTPUT DATA

203 cos

sin 204

$\theta$ (k)

$\Delta$ n

GENERATION OF PHASE ERROR

k

202

GENERATION OF CARRIER NUMBER

201

# F I G. 3

FIG. 2

EP 1 006 699 B1

FIG. 4

F I G. 5

FIG. 6

EP 1 006 699 B1